# EUROPEAN PATENT SPECIFICATION

(11) **EP 1 906 683 B1**
(45) Date of publication and mention of the grant of the patent: **06.05.2009**
(21) Application number: 07122411.7
(22) Date of filing: 27.09.2005
(51) Int. Cl.: H04W 4/16

(54) **Adaptive data delivery**
Adaptive Datenzustellung
Transmission de données adaptative

(43) Date of publication of application: 02.04.2008
(62) Divisional of application: 05256027.3
(73) Proprietor: Research In Motion Limited, Waterloo, Ontario N2L 3W8 (CA)
(72) Inventor: Lewis, Allan David, New Dundee Ontario N0B 2E0 (CA); Mousseau, Gary, Waterloo Ontario N2L 6M5 (CA)
(74) Representative: Fennell, Gareth Charles

(56) References cited:
- EP-A- 0 903 906
- EP-A- 1 047 239
- WO-A-20/05065296
- US-A1- 2004 116 119

## Description

### FIELD OF THE INVENTION

The present invention generally relates to a wireless communication system, and more specifically to a system and a method for adaptively delivering data to a wireless mobile device based upon the availability of the wireless mobile communication device in the wireless communication system.

### BACKGROUND OF THE INVENTION

In a wireless communication system designed to deliver data to a wireless mobile communication device ("mobile device") such as a cellular telephone, a two-way pager, a wireless communication capable personal digital assistant ("PDA"), and other similar device, there are several main components in the wireless communication system. A host service, which provides services such as e-mail, calendar, and Internet web browsing, holds the data to be delivered to the mobile device. The host service is coupled to a router, which couples the host service and a wireless network that is designed to communicate with the mobile device. To make a timely delivery of the data, the host service forwards the data for the mobile device to the router when the data becomes available. The router then forwards the data to the wireless network, which transmits the data to the mobile device. If the mobile device fails to receive the data, the router queues the data and re-forwards the data to the wireless network, which re-transmits the data to the mobile device. This process continues until the mobile device receives the data and acknowledges the reception or the process times out after a predetermined time period. While the data is being transmitted and queued, another data may become available for the mobile device in the host service, and may be forwarded to the router. The other data is then forwarded to the wireless network and is transmitted to the mobile device, but fails to be received by the mobile device. The host service continues to transmit more data, as they become available, to the router without the knowledge of the mobile device thereby wasting the host service resources, undeliverable data continues to accumulate in the router wasting the router resources, and the capacity in the wireless network is wasted by repeatedly transmitting the data without having any indication that the delivery of the data will be successful.

EP-A-0903906 discloses a scheme for adaptive control of transport layer connection in communication via radio and wire networks.

EP-A-1047239 discloses a system and method for stopping and resuming a data communication.

### SUMMARY

A wireless communication system, comprising a host service, a wireless router system coupled to the host service, a wireless network coupling the wireless router system and a wireless mobile communication device ("mobile device"), adaptively delivers data to the mobile device in the wireless communication system. When the host service has data to be delivered to the mobile device, it first determines the availability status of the mobile device at the host service. The availability status may be based upon its previous data delivery to the mobile device, a cached availability status at the wireless router system, which may check whether the mobile device is registered in the wireless network. The wireless network may be, but not limited to, a cellular telephone network, a two-way paging network, a short range wireless network such as Bluetooth^{™} and IEEE 802.11 compliant network, and others alike, through which the mobile device is accessible by the wireless router system. If the mobile device is determined to be available, then the host service transmits the data to the wireless router system, which delivers the data though the wireless network to the mobile device. However, if the mobile device is determined to be unavailable, then the host service queues the data but does not send the data until the mobile device is re-determined to be available, thereby avoiding unnecessary transmission of the data directed to the mobile device.

Aspects of the invention are defined in the accompanying independent claims.

### BRIEF DESCRIPTION OF THE DRAWINGS

FIG. 1 is an exemplary environment in which a wireless communication system in accordance with at least one of the preferred embodiments may be practiced;
FIG. 2 is an exemplary state diagram of a host service in accordance with at least one of the preferred embodiments;
FIG. 3 is an exemplary sequence diagram illustrating a sequence of adaptive delivery of data from a host service to a wireless mobile communication device in a wireless communication system in accordance with at least one of the preferred embodiments;
FIG. 4 is an exemplary flowchart illustrating a process of adaptive delivery of data to a wireless mobile communication device in a wireless communication system in accordance with at least one of the preferred embodiments;
FIG. 5 is an exemplary flowchart further illustrating the process for setting the availability status at the host service based upon the cached availability status at the wireless router system in accordance with at least one of the preferred embodiments;
FIG. 6 is an exemplary flowchart further illustrating the process for determining whether to re-transmit the data from the wireless router system to the mobile device in accordance with at least one of the preferred embodiments;
FIG. 7 is an exemplary block diagram of a wireless communication system configured to adaptively deliver data to a wireless mobile communication device in the wireless communication system in accordance with at least one of the preferred embodiments.

### DETAIL DESCRIPTION OF THE PREFERRED EMBODIMENTS

A wireless communication system, comprising a host service, a wireless router system coupled to the host service, a wireless network coupling the wireless router system and a wireless mobile communication device ("mobile device"), adaptively delivers data to the mobile device in the wireless communication system. When the host service has data to be delivered to the mobile device, it first determines the availability status of the mobile device at the host service. The availability status may be based upon its previous data delivery to the mobile device, a cached availability status at the wireless router system, which may check whether the mobile device is registered in the wireless network. The wireless network may be, but not limited to, a cellular telephone network, a two-way paging network, a short range wireless network such as Bluetooth^{™} and IEEE 802.11 compliant network, and others alike, through which the mobile device is accessible by the wireless router system. If the mobile device is determined to be available, then the host service transmits the data to the wireless router system, which delivers the data though the wireless network to the mobile device. However, if the mobile device is determined to be unavailable, then the host service queues the data but does not send the data until the mobile device is re-determined to be available, thereby avoiding unnecessary transmission of the data directed to the mobile device.

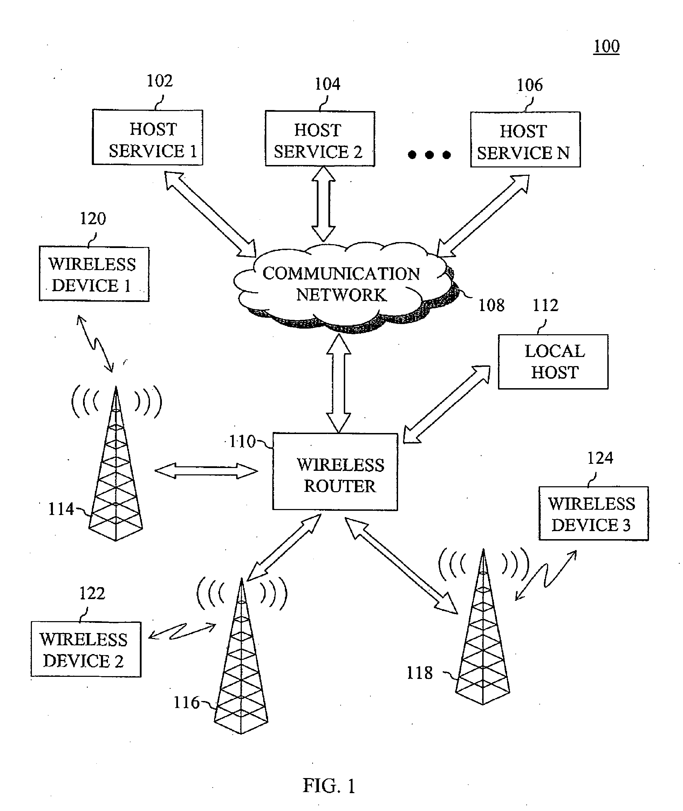

FIG. 1 is an exemplary wireless communication system 100 in which a wireless communication system in accordance with at least one of the preferred embodiments may be practiced. The exemplary wireless communication system 100 includes a plurality of host services (three shown, 102, 104, and 106), each of which may have a plurality of services such as, but not limited to, e-mail, calendar, Internet web browser, and other applications, available to their subscribers. The host services 102, 104, and 106 are connected to a communication network 108 such as Internet, which connects to a wireless router system 110 allowing communication between the host services 102, 104, and 106 and the wireless router 110. The wireless router system 110 may also be connected to a host service, such as a local service 112, without the communication network 108. The wireless router system 110 is connected to a plurality of wireless networks (three shown, 114, 116, and 118), each of which may support a plurality of mobile devices (one in each wireless network is shown, 120, 122, and 124). The wireless networks 114, 116, and 118 may be a cellular telephone network, a two-way paging network, a short range wireless network such as Bluetooth^{™} and IEEE 802.11 compliant network, and others alike, and the mobile devices 120, 122, and 124 are device compatible with the corresponding wireless network.

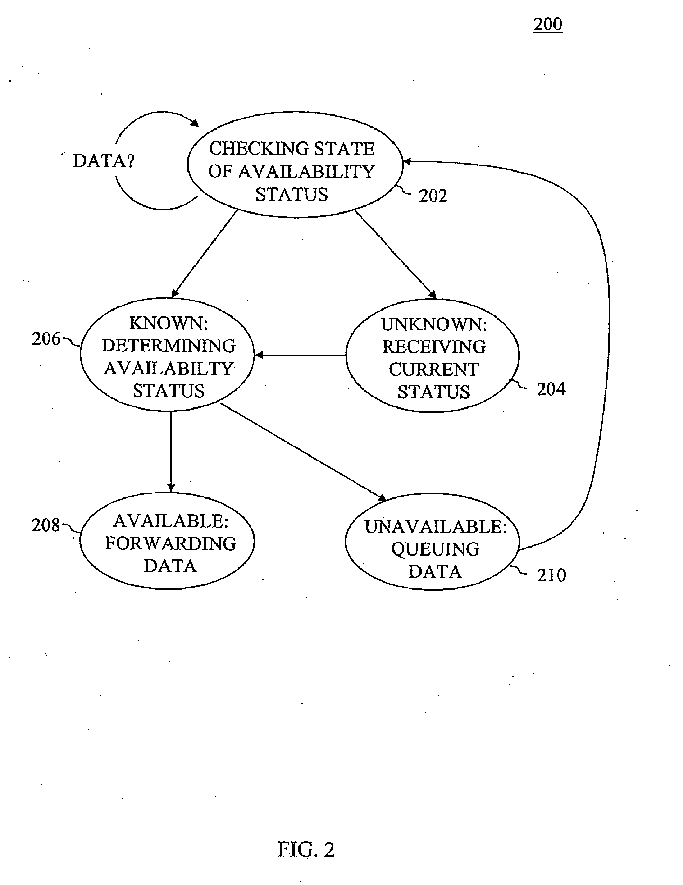

FIG. 2 is an exemplary state diagram 200 of a host service in accordance with at least one of the preferred embodiments. In this example, the states of the host service 102 attempting to deliver data to the mobile device 120 are illustrated. In state 202, the host service 102 checks whether the state of the availability status of the mobile device 120 is known upon generating the data to be delivered to the mobile device 120. The data may be generated internally by the host service 102 or may be generated in response to the host service 102 receiving corresponding data from another source. For example, the data may be a message from the host service 102 regarding a service that the host service provides to the mobile device 120 such as Internet web browsing, music downloads, news service, or any other host service specific services originating from the host service 102, or the data may be an e-mail message, sent from an external source and received by the host service 102, to be delivered to the mobile device 120. The availability status of the mobile device 120 may be, or become, unknown, for example, when the host service 120 initially generates the data having no prior knowledge of the availability of the mobile device 120, a previously stored availability status becomes stale or too old, or the host service encounters a reset condition such as losing connection to the wireless router system 110. If the host service 102 has data for the mobile device 120 and the availability status of in the mobile device 120 is unknown, the host service 102 requests, and receives from, the wireless router system 110 the current status of the mobile device 120 in the wireless router system 110 in state 204, and the availability status of in the mobile device 120 becomes known in state 206. The host service 102 may also receive an updated availability status whenever the availability status at the wireless router system 110 changes. If the host service 102 has data for the mobile device 120 and the availability status of in the mobile device 120 is known, in state 206, the host service 102 determines whether mobile device 120 is available based upon the known availability status. In state 208 where the known availability status of the mobile device 120 equals available, the host service forwards the data to the wireless router system 110. If the known availability status of the mobile device 120 equals unavailable available in state 210, the host service 102 queues the data and returns to state 202.

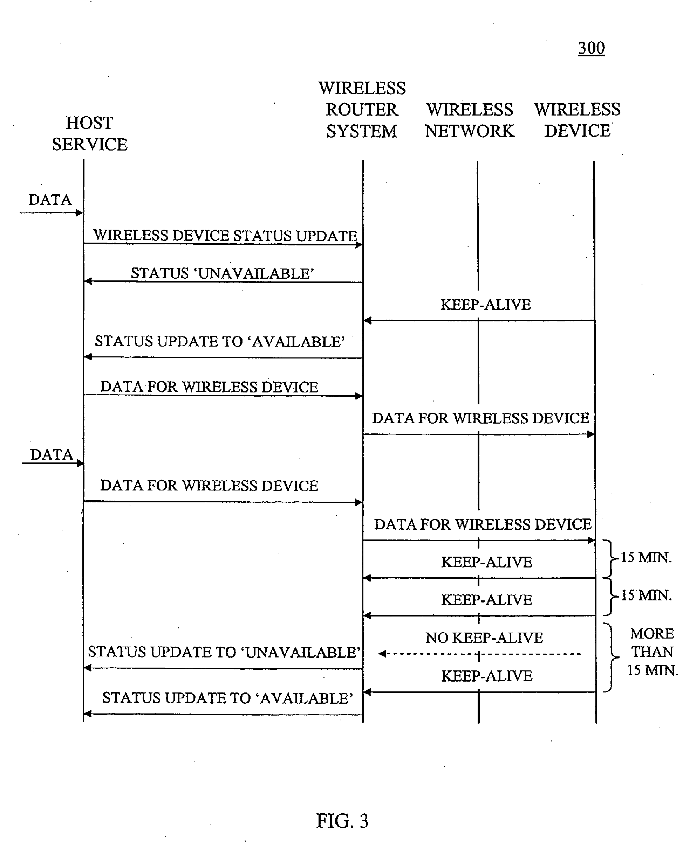

FIG. 3 is an exemplary sequence diagram 300 illustrating a sequence of adaptive delivery of data from the host service 102 to the mobile device 120 in the wireless communication system 100 in accordance with at least one of the preferred embodiments. When the host service 102 generates data for the mobile device 120 having no known state of the availability status of the mobile device 120, the host service 102 requests the availability status of the mobile device 120 at the wireless router system 110 from the wireless router system 110. In this example, the wireless router system returns the 'unavailable' status to the host service 102, and the data is queued in the host service 102. The host service 102 now has a known availability status of the mobile device 120, which is 'unavailable.' A while later, the wireless router system 110 receives a 'keep-alive' signal from the mobile device 120, indicating that the mobile device 120 is now available to receive data in the wireless communication system 100 through the wireless network 114, and has an effect of the mobile device 120 establishing a virtual connection with the wireless router system 110. The wireless router system now sends the 'available' status to the host service 102, and the host service 102 forwards the data to the wireless router system 110. The host service 102 now has a known availability status of the mobile device 120, which is 'available." The wireless router system now transmits the data to the mobile device 120 through the wireless network 114. When the host service 102 generates subsequent set of data for the mobile device 120, the availability status of the mobile device 120 is already know as 'available' and the host service 102 forwards the subsequent set of data to the wireless router system 114. The mobile device 120 is designed to transmit the 'keep-alive' signal at a predetermined time period such as every 15 minutes as shown in FIG. 3, and the wireless router system 110 keeps the current availability status of 'available' as long as the wireless router system 110 receives the keep-alive signal at the predetermined time period interval. FIG. 3 shows the wireless router system 110 receiving two consecutive keep-alive signals at the predetermined time period interval after transmitting the subsequent set of data. Because the wireless router system 110 has received the keep-alive signals at the predetermined time period interval, the availability status of the mobile device 120 is unchanged as available, and the wireless router system does not transmit an updated availability status to the host service 102. However, as shown in FIG. 3, the wireless router system 110 fails to receive the keep-alive signal from the mobile device 120 during the third expected interval. The availability status of the mobile device 120 is now changed to 'unavailable' and the wireless router system 110 transmits the updated availability status of 'unavailable' to the host service 102. The host service 102 then updates the availability status to 'unavailable' such that if any subsequent data for the mobile device 120 is generated while the availability status is 'unavailable,' the host service 102 queues such data. A while later, the wireless router system 110 again receives the keep-alive signal from the mobile device 120, and updates the availability status to 'available.' Because there has been a change in the availability status, the wireless router system transmits the updated availability status of 'available' the host service 102.

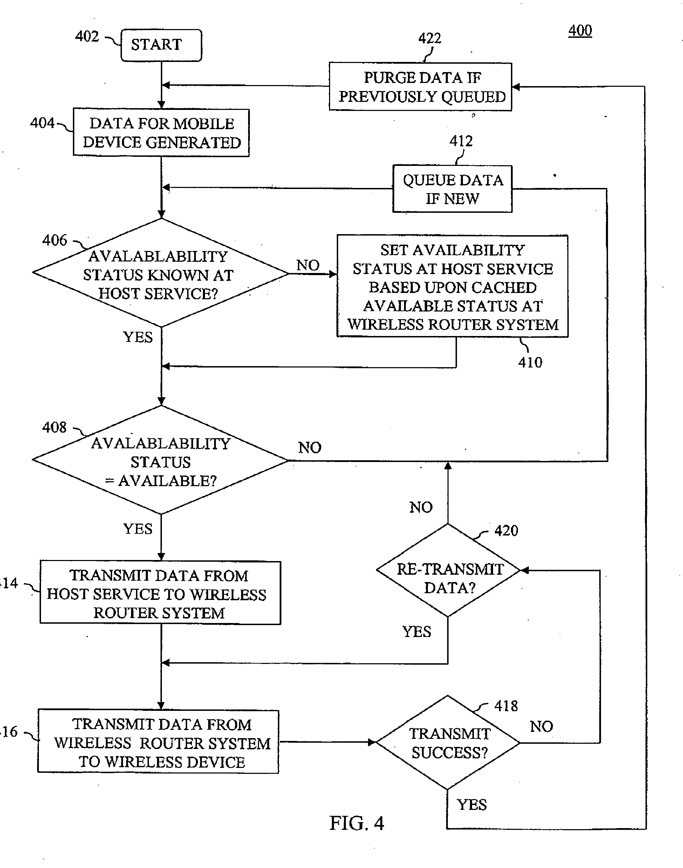

FIG. 4 is an exemplary flowchart 400 illustrating a process of adaptive delivery of data to a mobile device in the wireless communication system 100 in accordance with at least one of the preferred embodiments. For the purpose of the illustration, the data to be delivered resides in the host service 102, and the data is to be delivered to the mobile device 120. As previously explained, a host service may be connected to the wireless router system 110 with or without the communication network 108 such as Internet. The process begins in block 402 and data to be delivered to the mobile device 120 is generated in the host service 102 in block 404. The data may be generated internally by the host service 102 or may be generated in response to the host service receiving corresponding data from another source. For example, the data may be a message from the host service 102 regarding a service that the host service 102 provides to the mobile device 120 such as Internet web browsing, music downloads, news service, or any other host service specific services originating from the host service 102, or the data may be an e-mail message, which is sent from an external source and received by the host service 102, to be delivered to the mobile device 120. Initially, such as the very first time the host service 102 is to deliver the data to the mobile device 120, the host service 102 has no knowledge of the availability of the mobile device 120 in the wireless communication system 100. Instead of assuming that the mobile device 120 is available to receive the data and transmitting the data to the mobile device 120, whether the availability status of the mobile device 120 is known at the host service 102 is determined in block 406. Whether the availability status of the mobile device 120 is known at the host service 120 in block 406 may be based upon a stored availability status at the host service 102. The availability status of the mobile device 120 may be deemed to be unknown if there is no stored availability status of the mobile device 120 such as when the process is first initiated and there is no prior stored availability status of the mobile device 120 at the host service 102. Even if the stored availability status of the mobile device 120 is known, it may be deemed to be unknown if the stored availability status becomes stale or too old. The stored availability status may also become unknown if a connection between the host service 102 and the wireless router system 110 is lost.

If the availability status of the mobile device 120 is determined to be known in block 406, the process advances to block 408. However, if the availability status of the mobile device 120 is determined to be unknown in block 406, the availability status of the mobile device 120 at the host service 102 is set equal to a cashed availability status of the mobile device 120 at the wireless router system 110 in block 410. The availability status of the mobile device 120 at the host service 102 now becomes known, and the process advances to block 408. In block 408, the value of the known availability status of the mobile device 120, i.e., available or unavailable, at the host service 102 is determined. For example, the mobile device 120 may be determined to be unavailable because the mobile device 120 is outside of a coverage area provided by the wireless network 114 or is turned off, or the wireless network 114 is unavailable or unable to transmit the message to the mobile device 120.

If the known availability status is determined to equal unavailable in block 408, then the data becomes pending and is queued in the host service 102 in block 412, and the process loops back to block 406. The pending data is only queued in the host service 102 only if the pending data to be queued is new, and is not re-queued if the pending data has been already queued in a previous iteration. Queuing of the pending data at the host service 102 is helpful in preserving resources in the case of recovery from a system related failure such as a lost connection to the wireless router 110. If the known availability status is determined to equal available in block 408, then the data is transmitted from the host service 102 to the wireless router system 110 in block 414. The data is then transmitted from the wireless router system 110 to the mobile device 120 through the wireless network 114 in block 416. In block 418, whether the data transmission to the mobile device 120 has been successful is determined. The successful data transmission from the wireless router system 110 to the mobile device 120 may be determined based upon a confirmation signal transmitted from the mobile device 120 in response to successfully receiving the data. For example, there may be a predetermined time period within which the confirmation signal from the mobile device 120 is expected after the data is transmitted from the wireless router system 110. The availability status of the mobile device 120 at the wireless router system 110 may be re-determining upon the confirmation signal, and the cached availability status at the wireless router system 110 may then be updated with the re-determined availability status. If the data transmission is determined to be successful in block 418, then the process loops back to block 404, and waits for next data. However, if the data transmission is determined to be unsuccessful in block 418, then whether the data should be re-transmitted to the mobile device 120 is determined in block 420. If the data is determined to be re-transmitted, then the process loops back to block 416 where the data is re-transmitted to the mobile device 120. If the data is determined not to be re-transmitted in block 420, then the process advances to block 412 where the data is queued at the host service 102, and the process from block 406 is repeated. However, if the indication signal from the mobile device 120 is received by the wireless router system 110 after the data has been queued in the host service 102, the cached availability status of the mobile device 120 at the wireless router system 110 is updated to "available". The updated cached availability status of "available" is transmitted to the host service 102 from the wireless router system 110, making the available status at the host service 102 in block 408 equal to available. At this time, the pending data, which was previously queued, becomes ready to be delivered to the mobile device 120, and is unqueued. Then the process for determining successful transmission of data to the mobile device 120 from the host service 102, previously described in blocks 414, 416, 418 and 420, is followed. If the transmission of the queued data to the mobile device 120 is determined to be successful in block 418, then the previously queued data, which has now been successfully delivered to the mobile device 120, is purged in block 422. The process then advances to block 404, and waits for next data.

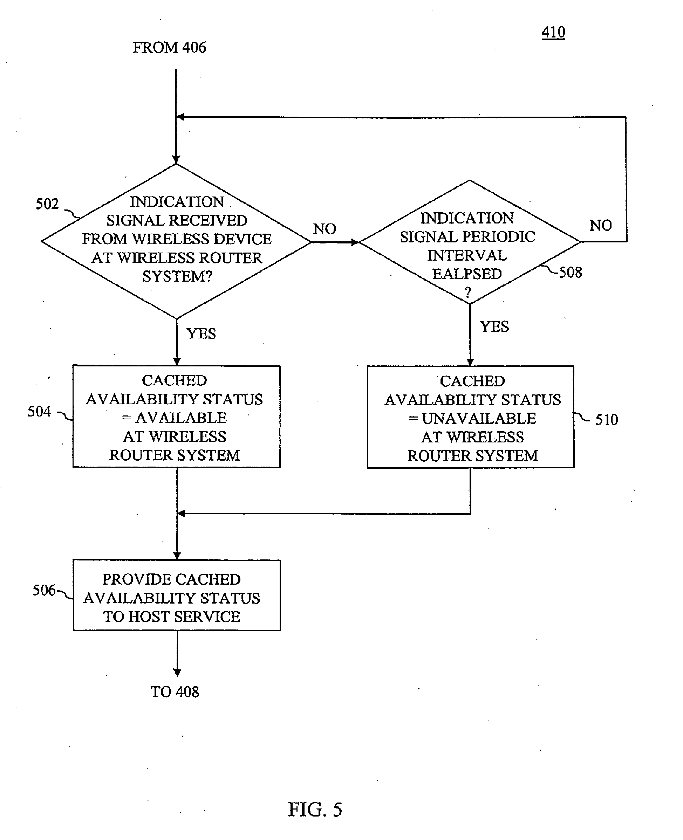

FIG. 5 is an exemplary flowchart further illustrating the process of block 410 for setting the availability status at the host service 102 based upon the cached availability status at the wireless router system 110 in accordance with at least one of the preferred embodiments. The cached availability status of the mobile device 120 at the wireless router system 110 may be based upon an indication signal transmitted from the mobile device 120. The indication signal, sometimes referred as a "heart beat" or a "keep-alive" signal, may be periodically transmitted by the mobile device 120, and if it is received by the wireless router system 110, it generally indicates that the mobile device 120 is available, or in a coverage area of the wireless network 114, and has an effect of the mobile device 120 establishing a virtual connection with the wireless router system 110. The indication signal, however, may also indicate unavailability of the mobile device 120 in the wireless communication system 100. For example, the mobile device 120 may have a very limited memory space left and is unable to receive further data, or due to its low battery status, its wireless communication ability may begin to shut down to conserve the battery power. The indication signal may include a plurality of functionality states of the wireless device 120 such as, but not limited to, the available memory space, battery status, and received signal strength indicator ("RSSI"). In this example for simplicity, the indication signal from the mobile device 120 is used to illustrate that the mobile device 120 is available in the wireless communication system 100.

In block 502, whether the indication signal from the mobile device 120 is received at the wireless router system 110 is determined. If it is determined that the indication signal has been received, then the cached availability status of the mobile device 120 at the wireless router system 110 is set to be "available" in block 504. If the cached availability status had previously been set to "unavailable" then it is re-set to be "available" in block 504. The process then advances to block 506. If the indication signal is determined not to have been received, then whether the indication signal periodic interval has elapsed is determined in block 508. If the indication signal periodic interval is determined not to have elapsed, then the process loops back to block 502. As long as the indication signal is received periodically at, or within, the indication signal periodic interval, the cached availability status of the mobile device 120 is kept equal to available. However, if the indication signal periodic

interval is determined to have elapsed in block 508, then the cached availability status of the mobile device 120 at the wireless router system 120 is set to be "unavailable" in block 510. If the cached availability status had previously been set to "available" then it is re-set to be "unavailable" in block 510. The process then advances to block 506. In block 506, the cached availability status of the mobile device 120, either available or unavailable, at the wireless router system 110 is provided to the host service 102, setting the availability status to be known at the host service 102.

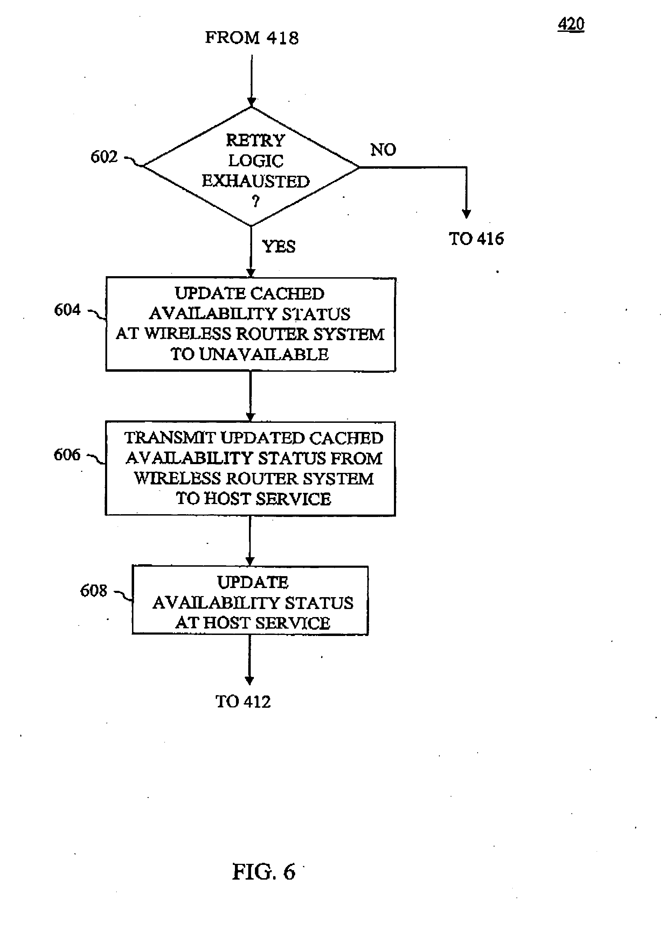

FIG. 6 is an exemplary flowchart further illustrating the process of block 420 for determining whether to re-transmit the data from the wireless router system 110 to the mobile device 120 as a result of the data transmission being determined to be unsuccessful in block 418. Such process does not form part of the invention but is useful for understanding the inventive technique in full. In block 602, whether predetermined re-try logic has been exhausted is determined. The predetermined re-try logic may include, and may be any combination of, a maximum number of re-transmissions, a maximum overall time of re-transmissions, and a maximum back-off time. When implementing a delivery system in a wireless network, it is common to use a progressive back-off method for re-transmitting data to a destination device. If the re-try logic has not been exhausted, then the process loops back to block 416 where the data is re-transmitted from the wireless router system 110 to the mobile device 120. However, if the re-try logic is exhausted, meaning that no confirmation signal has been received, the mobile device 120 is deemed to be unavailable and the cached availability status at the wireless router system 110 is updated to "unavailable," in block 604. The updated cached availability status is communicated from the wireless router system 110 to the host service 102 in block 606, and the availability status of the mobile device 120 at the host service 102 is updated to "unavailable." The process then advances to block 412 where the data is queued in the host service 102.

Because it takes a finite amount of time between when the mobile device 120 is determined to be available to receive the generated data and when the data is transmitted from the wireless router system 110 to the mobile device 120, there may be a change in the availability status of the mobile device 120 during that time. To address this concern, additional steps may be provided between block 414, in which the data is transmitted from the host service 102 to the wireless router system 110, and block 416, in which data is transmitted from the wireless router system 110 to the mobile device 120. For example, instead of solely relying on the availability status of the mobile device 120 at the host service 102, the availability status of the mobile device 120 may be evaluated at the wireless router system 110 when the data is transmitted from the host service 102 to the wireless router service 110 based upon the current cached availability status at the wireless router system 110. The decision whether to further transmit the data from the wireless router system 110 to the mobile device 120 then may be made based upon the evaluated cached availability status of the mobile device 120. If the evaluated cached availability status is "available", then the data is transmitted from the wireless router system 110 to the mobile device 120 in block 416, and the process previously described is followed. However, if the evaluated cached availability status is "unavailable", then the availability status of the mobile device 120 at the host service 102 is updated to "unavailable", and the data is queued at the host service 102 in block 41.2.

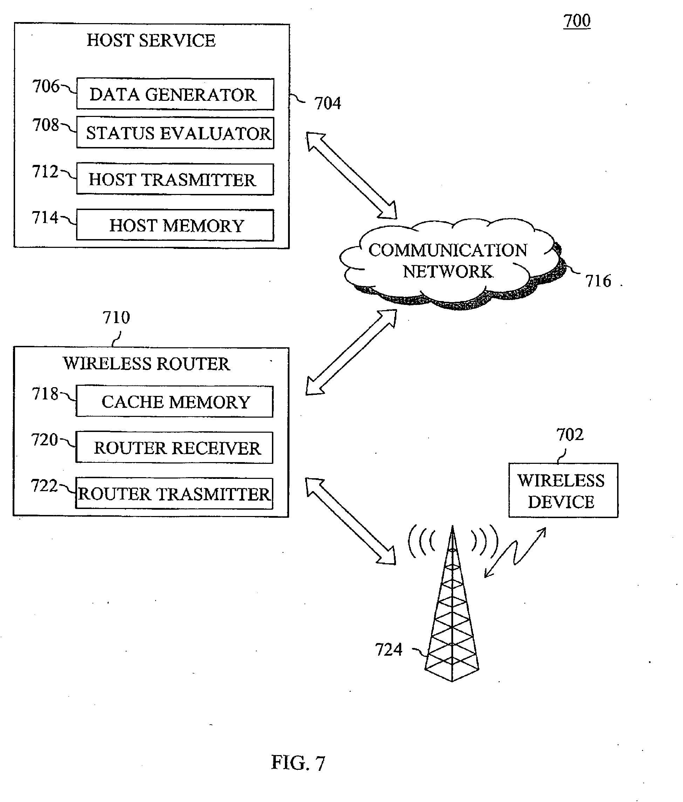

FIG. 7 is an exemplary block diagram of a wireless communication system 700 configured to adaptively deliver data to a wireless mobile communication device ("mobile device") in the wireless communication system 700 in accordance with at least one of the preferred embodiments. Although the wireless communication system 700 may include a plurality of host services, wireless networks, and wireless devices as previously shown in FIG. 1, the wireless communication system 700 in FIG. 7 is shown with a reduced number of elements for simplicity. The wireless communication system 700 includes a mobile device 702, and a host service 704, which includes a data generator 706 configured to generate data to be delivered to the mobile device 702. The data generator 706 may generate the data to be delivered to the mobile device 702 in response to receiving corresponding data. The host service 704 also includes a status evaluator 708 configured to determine whether an availability status of the wireless device 702 in the wireless communication system 700 is known. The host service 704 is coupled to a wireless router system 710, and has a host transmitter 712 that transmits the data to the wireless router system 710 if the known availability status of the mobile device 702 equals available. The host service 704 also has a host memory 714, and queues the data in the host memory 714 if the known availability status equals unavailable. The host service 704 only queues the data in the host memory 714 only if the data to be queued is new and does not requeue the data that has already been queued in a previous iteration. The host service 704 may be coupled to the wireless router system 710 through a communication network 716, which may be a wide area network such as Internet, and is configured to allow communication between the host service 704 and the wireless router system 710.

The wireless router system 710 includes a cache memory 718 configured to cache the availability status of the mobile device 702 in the wireless communication system 700. The wireless router system 710 also includes a router receiver 720 configured to receive the data from the host service 704, and a router transmitter 722 configured to transmit the data to a wireless communication network 724. The wireless communication network 724 is coupled to both the wireless router system 710 and the mobile device 702, and is configured to receive the data from the wireless router system 710 and to transmit the data to the mobile device 702. The wireless communication network 724 may be a cellular telephone network, a two-way paging network, a short range wireless network such as Bluetooth^{™} and IEEE 802.11 compliant network, and others alike, which is compatible with the mobile device 702.

If the status evaluator 708 determines that the availability status of the mobile device 702 in the wireless communication system 700 is not known, then the status evaluator 708 sets the cached availability status stored in the cache memory 718 as the known availability status. If the known availability status equals available, the host transmitter 712 transmits the data to the wireless router system 710. If the known availability status equals unavailable, the host service 704 queues the data in the host memory 714. The data generator 706 may treat the queued data in the host memory 714 as generated data.

The status evaluator 708 may also determine the availability status of the mobile device 702 based upon a stored availability status at the host service 704, for example in the host memory 714. The status evaluator 708 may determine that the availability status at the host service 704 is unknown if there is no stored availability status, or if a predetermined time period has passed since the availability status has been stored, meaning the stored availability status is too old. The status evaluator 708 may also determine that the availability status at the host service 704 is unknown if a connection between the host service 704 and the wireless router system 710 is lost.

At the wireless router system 710, the cached availability status of the wireless device 702 may be based upon an indication signal from the wireless device 702. The indication signal may sometimes be referred as a "heart beat" or a "keep-alive" signal. If the wireless router system 710 receives the indication signal, for example by the router receiver 720, it indicates that the wireless device 702 is available, or in a coverage area of the wireless network 724. The indication signal may include various states of the wireless device 702 in addition to an indication being available to receive the data from the host service 704 such as, but not limited to, current location based on a Global Positioning System ("GPS") data, battery status, memory status, transmit power level, receive signal strength indicator ("RSSI") value, and other parameters. If the wireless router system 710 receives the indication signal from the mobile device 702, the wireless router system 710 makes the cached availability status of the wireless device 702 equal to available in the cache memory 718. If the wireless router system 701 fails to receive the indication signal from the wireless device 702, the wireless router system 710 makes the cached availability status of the wireless device 702 equal to unavailable in the cache memory 718.

The wireless device 702 may transmit the indication signal periodically, and the wireless router system 710 may keep the cached availability status in the cache memory 718 equal to available if the wireless router system 710 receives the indication signal from the mobile device 702 periodically at a predetermined interval. Conversely, if the wireless router system 710 fails to receive the indication signal from the mobile device 702 periodically at a predetermined interval, the wireless router system may change the cached availability status to unavailable, and transmit the changed cached availability status to the host service 704, for example, by the router transmitter 722, causing the status evaluator 708 to update the known availability status to unavailable. The cached availability status may be changed back to available when wireless router system 710 once again receives the indication signal from the mobile device 702, and may transmit the changed cached availability status, now back to available, to the host service 704. If there is queued data at the host service 704 at this time, then the host transmitter 712 transmits the queued data to the wireless router system 710.

After the router transmitter 722 transmits the data to the mobile device 702, the wireless router system 710 may determine whether the data transmission to the wireless device 702 has been successful based upon a confirmation signal transmitted from the wireless device 702 in response to successfully receiving the data. The wireless router system 710 may then re-determine the availability status of the wireless device 702 based upon the confirmation signal, and update the cached availability status in the cache memory 718 with the re-determined availability status. The wireless router system 710 may be configured to receive the confirmation signal within a predetermined time period after transmission of the data to the mobile device 702, and to re-transmit the data to the mobile device 702 until predetermined re-try logic is exhausted if the wireless router system 710 fails to receive the confirmation signal within the predetermined time period. The predetermined re-try logic may one or any combination of a maximum number of re-transmissions, a maximum overall time of re-transmissions, and a maximum back-off time. When implementing a delivery system in a wireless network, it is common to use a progressive back-off method for re-transmitting data to a destination device. If the wireless router system 710 fails to receive the confirmation signal after the predetermined re-try logic is exhausted, then the wireless router system 710 updates the cached availability status in the cache memory 718 of the mobile device 702 to unavailable. The wireless router system 710 then transmits the updated cached availability status to the host service 704, which updates the availability status of the mobile device 702 to unavailable and to queue the data in the host memory 714. However, if the indication signal from the mobile device 702 is received by the wireless router system 710 after the data has been queued in the host memory 714, the cached availability status of the mobile device 702 at the wireless router system 710 is updated to "available". The updated cached availability status of "available" is transmitted to the host service 704 from the wireless router system 710, making the status evaluator 708 to set the availability status at the host service 702 to equal available. The wireless router system 710 then determines whether the transmission of queued data to the mobile device 702 has been successful as previously described. If the wireless router system 710 determines that the transmission of the queued data to the mobile device 702 has been successful, then the host service 704 purges the previously queued data, which

has now been successfully delivered to the mobile device 702, from the host memory 714.

Because it takes a finite amount of time between when the wireless router system 710 determines that the mobile device 702 is available and when the router receiver 720 receives the data from the host service 704, it is possible for the mobile device 702 to have changed the availability status during that time. To address this possibility, the wireless router system 710 be configured to evaluate the cached availability status of the mobile device 702 after receiving the data from the host service 704 but before transmitting the data to the mobile network 724. If the evaluated cached availability status is equal to available, then the router transmitter transmits the data to the mobile device 702 through the wireless communication network 724. The determination of a successful reception of the data by the mobile device 702, re-transmission of the data, updating of the cached availability status and availability status at the host service 704, and queuing of the data may be performed as previously described.

While the preferred embodiments of the invention have been illustrated and described, it is to be understood that the invention is not so limited. Numerous modifications, changes, variations, substitutions and equivalents will occur to those skilled in the art without departing from the scope of the present invention as defined by the appended claims.

## Claims

1. A method for use in delivering data from a host service (102) to a wireless mobile communication device (122) through a wireless router system (110) which is coupled to a plurality of wireless communication networks and to the host service (102) through a communication network (108), the method comprising:
generating the data at the host service (102);
determining at the host service (102) whether an availability status of the mobile device (122) in a wireless communication network (116) is known;
if the availability status is known at the host service (102),
transmitting the data from the host service (102) to the wireless router system (110) if the known availability status at the host service (102) equals available;
queuing the data at the host service (102) without transmission to the wireless router system (110) if the known availability status equals unavailable;
if the availability status is not known at the host service (102),
requesting and receiving, from the wireless router system (110), a cached available status of the mobile device; and
setting, at the host service (102), the cached availability status of the mobile device (122) received from the wireless router system (110) as the known availability status.

2. The method of claim 1, further comprising:
transmitting the data from the wireless router system (110) to the mobile device (122) if the known availability status at the host service (102) equals available.

3. The method of claim 2, wherein the communication network (108) comprises the Internet.

4. The method of claim 2, wherein generating the data at the host service (102) includes:
generating the data in response to receiving corresponding data; and
queuing the data at the host service (102).

5. The method of claim 4, after queuing the data at the host service (102), further comprising:
updating the cached availability status of the mobile device (122) at the wireless router system (110) to available if the wireless router system (110) receives an indication signal;
transmitting the updated cached availability status of available to the host service (102) from the wireless router system (110);
transmitting the queued data from the host service (102) to the wireless router system (110); and
purging the queued data from the host service (102) if the transmission to the mobile device (122) is successful.

6. The method of claim 5, wherein determining at the host service (102) whether the availability status of the mobile device (122) in the wireless communication system (100) is known is based upon a stored availability status at the host service (102) and includes at least one of:
determining that the availability status at the host service (102) is unknown if there is no stored availability status at the host service (102);
determining that the availability status at the host service (102) is unknown if a predetermined time period has passed since storing the availability status; and
determining that the availability status at the host service (102) is unknown if a connection between the host service (102) and the wireless router system (110) is lost.

7. The method of claim 6, wherein the cached availability status of the mobile device (122) at the wireless router system (110) is based upon an indication signal from the mobile device (122).

8. The method of claim 7, wherein the indication signal includes a plurality of functionality states of the mobile device (122).

9. The method of claim 8, further comprising:
making the cached availability status of the mobile device (122) at the wireless router system (110) equal to available if the wireless router system (110) receives the indication signal from the wireless device (122), and
making the cached availability status of the mobile device (122) at the wireless router system (110) equal to unavailable if the wireless router system (110) fails to receive the indication signal from the mobile device (122).

10. The method of claim 9, further comprising:
after making the cached availability status of the mobile device (122) at the wireless router system (110) equal to available,
keeping the cached availability status at the wireless router system (110) equal to available if the wireless router system (110) receives the indication signal from the mobile device (122) at a predetermined interval; and
changing the cached availability status at the wireless router system (110) to unavailable if the wireless router system (110) fails to receives the indication signal from the mobile device (122) within the predetermined interval, and
transmitting the changed cached availability status from the wireless router system (110) to the host service (102);
after making the cached availability status of the mobile device (122) at the wireless router system (110) equal to unavailable,
changing the cached availability status at the wireless router system (110) to available if the wireless router system (110) receives the indication signal from the mobile device (122), and
transmitting the changed cached availability status from the wireless router system (110) to the host service (102).

11. A wireless communication system (100) configured to deliver data to a wireless mobile communication device, the wireless communication system (100) comprising:
a host service (102) configured to generate data to be delivered to the mobile device (122), to determine whether an availability status of the mobile device (122) in a wireless communication network (116) is known, to transmit the data if the known availability status equals available, and queue the data without transmission if the known availability status equals unavailable;
a wireless router system (110) for connecting to the host service (102) via a communication network (108) and to a plurality of wireless communication networks which includes the wireless communication network (116), the wireless router system (110) configured to determine and cache the availability status of the mobile device (122) in the wireless communication network (116), to receive the data from the host service (102) when the availability status of the mobile device (122) is available, and to transmit the data; and
the wireless communication network (116) coupled to the wireless router system (110) and the mobile device (122), the wireless communication network (116) configured to receive the data from the wireless router system (110) and to transmit the data to the mobile device (122),
wherein:
if the host service (102) determines that the availability status of the mobile device (122) in the wireless communication network (116) is not known, the host service (102) is further configured to request and receive the cached available status of the mobile device from the wireless router system (110), to set the known availability status based upon the cached availability status of the mobile device (122) received from the wireless router system (110), to transmit the data if the set known availability status equals available, and to queue the data if the set known availability status equals unavailable.

12. The wireless communication system (100) of claim 11, wherein the communication network (108) comprises the Internet.

13. The wireless communication system (100) of claim 11, wherein, if the wireless router system (110) receives an indication signal after the data is queued at the host service (102), the wireless router system (110) is further configured to:
update the cached availability status of the mobile device (122) to available,
transmit to the host service (102) the updated the availability status of the mobile device (122),
receive the queued data from the host service (102), and
transmit the queued data to the mobile device (122).

14. The wireless communication system (100) of claim 13, wherein the host service (102) is further configured to purge the queued data if the transmission of the queued data to the mobile device (122) is successful.

15. The wireless communication system (100) of claim 14, wherein the host service (102) is further configured to determine whether the availability status of the mobile device (122) in the wireless communication network (116) is known is based upon a stored availability status at the host service (102), and to set the availability status at the host service (102) to unknown if:
there is no stored availability status,
a predetermined time period has passed since the availability status has been stored, and
a connection between the host service (110) and the wireless router system (110) is lost.

16. The wireless communication system (100) of claim 15, wherein the cached availability status of the mobile device (122) at the wireless router system (110) is based upon an indication signal from the mobile device (122).

17. The wireless communication system (100) of claim 16, wherein the indication signal includes a plurality of functionality states of the mobile device (122).

18. The wireless communication system (100) of claim 17, wherein the wireless router system (110) is further configured to make the cached availability status of the mobile device (122) equal to available if the wireless router system (110) receives the indication signal from the mobile device (122), and to make the cached availability status of the mobile device (122) at the wireless router system (110) equal to unavailable if the wireless router system (110) fails to receive the indication signal from the mobile device (122).

19. The wireless communication system (100) of claim 18, wherein, after the wireless router system (110) makes the cached availability status of the mobile device (122) equal to available, the wireless router system (110) is further configured to:
keep the cached availability status at the wireless router system (110) equal to available if the wireless router system (110) receives the indication signal from the mobile device (122) at a predetermined interval,
change the cached availability status to unavailable if the wireless router system (110) fails to receives the indication signal from the mobile device (122) within the predetermined interval, and
transmit the changed cached availability status to the host service (102).

20. The wireless communication system (100) of claim 18, wherein, after the wireless router system (110) makes the cached availability status of the mobile device (122) equal to unavailable, the wireless router system (110) is further configured to:
change the cached availability status at the wireless router system (110) to available if the wireless router system (110) receives the indication signal from the mobile device (122), and
transmit the changed cached availability status from the wireless router system (110) to the host service (102).

21. A host which provides a host service (102) for delivering data to a wireless mobile communication device (122) via a wireless communication network (116), the host service (102) being adapted to connect to a wireless router system (110) via a communication network (108) for communications through the wireless communication network (116), the wireless router system (110) being coupled to a plurality of wireless communication networks which includes the wireless communication network (116), the host service (102) being **characterized in that:**
the host service (102) is configured to generate data to be delivered to the mobile device (122), to determine whether an availability status of the mobile device (122) in the wireless communication network (116) is known, to transmit the data if the known availability status equals available, and queue the data without transmission if the known availability status equals unavailable; and
the host service (110) is further configured to, if the availability status of the mobile device (122) in the wireless communication network (116) is not known, request and receive a cached available status of the mobile device from the wireless router system (110), to set the known availability status based upon the cached availability status of the mobile device (122) received from the wireless router system (110), to transmit the data if the set known availability status equals available, and to queue the data without transmission to the wireless router system (110) if the set known availability status equals unavailable.

22. The host of claim 21, wherein the communication network (108) comprises the Internet.

23. The host of claim 21, wherein the host service (102) is further configured to purge the queued data if the transmission of the queued data to the mobile device (122) is successful.

24. The host of claim 21, wherein the host service (102) is further configured to determine whether the availability status of the mobile device (122) in the wireless communication network (116) is known is based upon a stored availability status at the host service (102), and to set the availability status at the host service (102) to unknown if:
there is no stored availability status,
a predetermined time period has passed since the availability status has been stored, and
a connection between the host service (102) and the wireless router system (110) is lost.

25. The host of claim 21, wherein the cached availability status of the mobile device (122) at the wireless router system (110) is based upon an indication signal from the mobile device (122).

## Patentansprüche

1. Verfahren zur Verwendung bei einer Lieferung von Daten von einem Host-Dienst (102) an eine drahtlose mobile Kommunikationsvorrichtung (122) über ein drahtloses Router-System (110), das mit einer Vielzahl von drahtlosen Kommunikationsnetzwerken und dem Host-Dienst (102) durch ein Kommunikationsnetzwerk (108) verbunden ist, wobei das Verfahren aufweist:
Erzeugen der Daten an dem Host-Dienst (102);
Bestimmen an dem Host-Dienst (102), ob ein Verfügbarkeitsstatus der mobilen Vorrichtung (122) in einem drahtlosen Kommunikationsnetzwerk (116) bekannt ist;
wenn der Verfügbarkeitsstatus an dem Host-Dienst (102) bekannt ist,
Übertragen der Daten von dem Host-Dienst (102) an das drahtlose Router-System (110), wenn der bekannte Verfügbarkeitsstatus an dem Host-System (102) "verfügbar" entspricht;
Einreihen der Daten in eine Warteschlange an dem Host-Dienst (102) ohne Übertragung an das drahtlose Router-System (110), wenn der bekannte Verfügbarkeitsstatus "nicht verfügbar" entspricht;
wenn der Verfügbarkeitsstatus an dem Host-Dienst (102) nicht bekannt ist, Anfordern und Empfangen von dem drahtlosen Router-System (110) eines gespeicherten Verfügbarkeitsstatus der mobilen Vorrichtung; und
Einstellen an dem Host-Dienst (102) des gespeicherten Verfügbarkeitsstatus der mobilen Vorrichtung (122), der von dem drahtlosen Router-System (110) empfangen wird, als den bekannten Verfügbarkeitsstatus.

2. Verfahren gemäß Anspruch 1, das weiter aufweist:
Übertragen der Daten von dem drahtlosen Router-System (110) an die mobile Vorrichtung (122), wenn der bekannte Verfügbarkeitsstatus an dem Host-Dienst (102) "verfügbar" entspricht.

3. Verfahren gemäß Anspruch 2, wobei das Kommunikationsnetzwerk (108) das Internet aufweist.

4. Verfahren gemäß Anspruch 2, wobei ein Erzeugen der Daten an dem Host-Dienst (102) umfasst:
Erzeugen der Daten als Reaktion auf einen Empfang von entsprechenden Daten; und
Einreihen der Daten in eine Warteschlange an dem Host-Dienst (102).

5. Verfahren gemäß Anspruch 4, das nach dem Einreihen der Daten in eine Warteschlange an dem Host-Dienst (102) weiter aufweist:
Aktualisieren des gespeicherten Verfügbarkeitsstatus der mobilen Vorrichtung (122) an dem drahtlosen Router-System (110) auf "verfügbar", wenn das drahtlose Router-System (110) ein Anzeigesignal empfängt;
Übertragen des aktualisierten gespeicherten Verfügbarkeitsstatus von "verfügbar" an den Host-Dienst (102) von dem drahtlosen Router-System (110); Übertragen der Warteschlangen-Daten von dem Host-Dienst (102) an das drahtlose Router-System (110); und
Löschen der Warteschlangen-Daten von dem Host-Dienst (102), wenn die Übertragung an die mobile Vorrichtung (122) erfolgreich ist.

6. Verfahren gemäß Anspruch 5, wobei ein Bestimmen an dem Host-Dienst (102), ob der Verfügbarkeitsstatus der mobilen Vorrichtung (122) in dem drahtlosen Kommunikationssystem (100) bekannt ist, auf einem gespeicherten Verfügbarkeitsstatus an dem Host-Dienst (102) basiert und zumindest eines umfasst aus:
einer Bestimmung, dass der Verfügbarkeitsstatus an dem Host-Dienst (102) unbekannt ist, wenn es keinen gespeicherten Verfügbarkeitsstatus an dem Host-Dienst (102) gibt;
einer Bestimmung, dass der Verfügbarkeitsstatus an dem Host-Dienst (102) unbekannt ist, wenn eine vorgegebene Zeitdauer seit einem Speichern des Verfügbarkeitsstatus vergangen ist; und
einer Bestimmung, dass der Verfügbarkeitsstatus an dem Host-Dienst (102) unbekannt ist, wenn eine Verbindung zwischen dem Host-Dienst (102) und dem drahtlosen Router-System (110) abgebrochen ist.

7. Verfahren gemäß Anspruch 6, wobei der gespeicherte Verfügbarkeitsstatus der mobilen Vorrichtung (122) an dem drahtlosen Router-System (110) auf einem Anzeigesignal von der mobilen Vorrichtung (122) basiert.

8. Verfahren gemäß Anspruch 7, wobei das Anzeigesignal eine Vielzahl von Funktionalitätszuständen der mobilen Vorrichtung (122) umfasst.

9. Verfahren gemäß Anspruch 8, das weiter aufweist:
Einstellen des gespeicherten Verfügbarkeitsstatus der mobilen Vorrichtung (122) an dem drahtlosen Router-System (110) auf "verfügbar", wenn das drahtlose Router-System (110) das Anzeigesignal von der drahtlosen Vorrichtung (122) empfängt, und
Einstellen des gespeicherten Verfügbarkeitsstatus der mobilen Vorrichtung (122) an dem drahtlosen Router-System (110) auf "nicht verfügbar", wenn das drahtlose Router-System (110) das Anzeigesignal von der mobilen Vorrichtung (122) nicht empfängt.

10. Verfahren gemäß Anspruch 9, das weiter aufweist:
nach dem Einstellen des gespeicherten Verfügbarkeitsstatus der mobilen Vorrichtung (122) an dem drahtlosen Router-System (110) auf "verfügbar",
Halten des gespeicherten Verfügbarkeitsstatus an dem drahtlosen Router-System (110) auf "verfügbar", wenn das drahtlose Router-System (110) das Anzeigesignal von der mobilen Vorrichtung (122) in einem vorgegebenen Intervall empfängt; und
Ändern des gespeicherten Verfügbarkeitsstatus an dem drahtlosen Router-System (110) auf "nicht verfügbar", wenn das drahtlose Router-System (110) das Anzeigesignal von der mobilen Vorrichtung (122) innerhalb des vorgegebenen Intervalls nicht empfängt, und
Übertragen des geänderten gespeicherten Verfügbarkeitsstatus von dem drahtlosen Router-System (110) an den Host-Dienst (102);
nach dem Einstellen des gespeicherten Verfügbarkeitsstatus der mobilen Vorrichtung (122) an dem drahtlosen Router-System (110) auf "nicht verfügbar",
Ändern des gespeicherten Verfügbarkeitsstatus an dem drahtlosen Router-System (110) auf "verfügbar", wenn das drahtlose Router-System (110) das Anzeigesignal von der mobilen Vorrichtung (122) empfängt, und
Übertragen des geänderten gespeicherten Verfügbarkeitsstatus von dem drahtlosen Router-System (110) an den Host-Dienst (102).

11. Drahtloses Kommunikationssystem (100), das konfiguriert ist, Daten an eine drahtlose mobile Kommunikationsvorrichtung zu liefern, wobei das drahtlose Kommunikationssystem (100) aufweist:
einen Host-Dienst (102), der konfiguriert ist, Daten zu erzeugen zur Lieferung an die mobile Vorrichtung (122), zu bestimmen, ob ein Verfügbarkeitsstatus der mobilen Vorrichtung (122) in einem drahtlosen Kommunikationsnetzwerk (116) bekannt ist, die Daten zu übertragen, wenn der bekannte Verfügbarkeitsstatus "verfügbar" entspricht, und die Daten ohne Übertragung in eine Warteschlange einzureihen, wenn der bekannte Verfügbarkeitsstatus "nicht verfügbar" entspricht;
ein drahtloses Router-System (110) zur Verbindung mit dem Host-Dienst (102) über ein Kommunikationsnetzwerk (108) und mit einer Vielzahl von drahtlosen Kommunikationsnetzwerken, die das drahtlose Kommunikationsnetzwerk (116) umfassen, wobei das drahtlose Router-System (110) konfiguriert ist, den Verfügbarkeitsstatus der mobilen Vorrichtung (122) in dem drahtlosen Kommunikationsnetzwerk (116) zu bestimmen und zu speichern, die Daten von dem Host-Dienst (102) zu empfangen, wenn der Verfügbarkeitsstatus der mobilen Vorrichtung (122) "verfügbar" entspricht, und die Daten zu übertragen; und
das drahtlose Kommunikationsnetzwerk (116), das verbunden ist mit dem drahtlosen Router-System (110) und der mobilen Vorrichtung (122), wobei das drahtlose Kommunikationsnetzwerk (116) konfiguriert ist, die Daten von dem drahtlosen Router-System (110) zu empfangen und die Daten an die mobile Vorrichtung (122) zu übertragen, wobei:
wenn der Host-Dienst (102) bestimmt, dass der Verfügbarkeitsstatus der mobilen Vorrichtung (122) in dem drahtlosen Kommunikationsnetzwerk (116) nicht bekannt ist, der Host-Dienst (102) weiter konfiguriert ist, den gespeicherten Verfügbarkeitsstatus der mobilen Vorrichtung von dem drahtlosen Router-System (110) anzufordern und zu empfangen, den bekannten Verfügbarkeitsstatus einzustellen basierend auf dem gespeicherten Verfügbarkeitsstatus der mobilen Vorrichtung (122), empfangen von dem drahtlosen Router-System (110), die Daten zu übertragen, wenn der eingestellte bekannte Verfügbarkeitsstatus "verfügbar" entspricht, und die Daten in eine Warteschlange einzureihen, wenn der eingestellte bekannte Verfügbarkeitsstatus "nicht verfügbar" entspricht.

12. Drahtloses Kommunikationssystem (100) gemäß Anspruch 11, wobei das Kommunikationsnetzwerk (108) das Internet aufweist.

13. Drahtloses Kommunikationssystem (100) gemäß Anspruch 11, wobei, wenn das drahtlose Router-System (110) ein Anzeigesignal empfängt, nachdem die Daten an dem Host-Dienst (102) in eine Warteschlange eingereiht werden, das drahtlose Router-System (110) weiter konfiguriert ist:
den gespeicherten Verfügbarkeitsstatus der mobilen Vorrichtung (122) auf "verfügbar" zu aktualisieren,
den aktualisierten Verfügbarkeitsstatus der mobilen Vorrichtung (122) an den Host-Dienst (102) zu übertragen,
die Warteschlangen-Daten von dem Host-Dienst (102) zu empfangen, und die Warteschlangen-Daten an die mobile Vorrichtung (122) zu übertragen.

14. Drahtloses Kommunikationssystem (100) gemäß Anspruch 13, wobei der Host-Dienst (102) weiter konfiguriert ist, die Warteschlangen-Daten zu löschen, wenn die Übertragung der Warteschlangen-Daten an die mobile Vorrichtung (122) erfolgreich ist.

15. Drahtloses Kommunikationssystem (100) gemäß Anspruch 14, wobei der Host-Dienst (102) weiter konfiguriert ist, zu bestimmen, ob der Verfügbarkeitsstatus der mobilen Vorrichtung (122) in dem drahtlosen Kommunikationsnetzwerk (116) bekannt ist, basierend auf einem gespeicherten Verfügbarkeitsstatus an dem Host-Dienst (102), und den Verfügbarkeitsstatus an dem Host-Dienst (102) auf "unbekannt" einzustellen, wenn:
es keinen gespeicherten Verfügbarkeitsstatus gibt,
eine vorgegebene Zeitdauer vergangen ist, seit der Verfügbarkeitsstatus gespeichert wurde, und
eine Verbindung zwischen dem Host-Dienst (110) und dem drahtlosen Router-System (110) abgebrochen ist.

16. Drahtloses Kommunikationssystem (100) gemäß Anspruch 15, wobei der gespeicherte Verfügbarkeitsstatus der mobilen Vorrichtung (122) an dem drahtlosen Router-System (110) auf einem Anzeigesignal von der mobilen Vorrichtung (122) basiert.

17. Drahtloses Kommunikationssystem (100) gemäß Anspruch 16, wobei das Anzeigesignal eine Vielzahl von Funktionalitätszuständen der mobilen Vorrichtung (122) umfasst.

18. Drahtloses Kommunikationssystem (100) gemäß Anspruch 17, wobei das drahtlose Router-System (110) weiter konfiguriert ist, den gespeicherten Verfügbarkeitsstatus der mobilen Vorrichtung (122) auf "verfügbar" einzustellen, wenn das drahtlose Router-System (110) das Anzeigesignal von der mobilen Vorrichtung (122) empfängt, und den gespeicherten Verfügbarkeitsstatus der mobilen Vorrichtung (122) an dem drahtlosen Router-System (110) auf "nicht verfügbar" einzustellen, wenn das drahtlose Router-System (110) das Anzeigesignal von der mobilen Vorrichtung (122) nicht empfängt.

19. Drahtloses Kommunikationssystem (100) gemäß Anspruch 18, wobei, nachdem das drahtlose Router-System (110) den gespeicherten Verfügbarkeitsstatus der mobilen Vorrichtung (122) auf "verfügbar" eingestellt hat, das drahtlose Router-System (110) weiter konfiguriert ist:
den gespeicherten Verfügbarkeitsstatus an dem drahtlosen Router-System (110) auf "verfügbar" zu halten, wenn das drahtlose Router-System (110) das Anzeigesignal von der mobilen Vorrichtung (122) in einem vorgegebenen Intervall empfängt,
den gespeicherten Verfügbarkeitsstatus auf "nicht verfügbar" zu ändern, wenn das drahtlose Router-System (110) das Anzeigesignal von der mobilen Vorrichtung (122) innerhalb des vorgegebenen Intervalls nicht empfängt, und
den geänderten gespeicherten Verfügbarkeitsstatus an den Host-Dienst (102) zu übertragen.

20. Drahtloses Kommunikationssystem (100) gemäß Anspruch 18, wobei, nachdem das drahtlose Router-System (110) den gespeicherten Verfügbarkeitsstatus der mobilen Vorrichtung (122) auf "nicht verfügbar" eingestellt hat, das drahtlose Router-System (110) weiter konfiguriert ist:
den gespeicherten Verfügbarkeitsstatus an dem drahtlosen Router-System (110) auf "verfügbar" einzustellen, wenn das drahtlose Router-System (110) das Anzeigesignal von der mobilen Vorrichtung (122) empfängt, und
den geänderten gespeicherten Verfügbarkeitsstatus von dem drahtlosen Router-System (110) an den Host-Dienst (102) zu übertragen.

21. Host, der einen Host-Dienst (102) vorsieht zum Liefern von Daten an eine drahtlose mobile Kommunikationsvorrichtung (122) über ein drahtloses Kommunikationsnetzwerk (116), wobei der Host-Dienst (102) ausgebildet ist, sich mit einem drahtlosen Router-System (110) über ein Kommunikationsnetzwerk (108) zu verbinden zur Kommunikation über das drahtlose Kommunikationsnetzwerk (116), wobei das drahtlose Router-System (110) mit einer Vielzahl von drahtlosen Kommunikationsnetzwerken verbunden ist, die das drahtlose Kommunikationsnetzwerk (116) umfassen, wobei der Host-Dienst (102) **dadurch gekennzeichnet ist, dass**:
der Host-Dienst (102) konfiguriert ist, Daten zu erzeugen zur Lieferung an die mobile Vorrichtung (122), zu bestimmen, ob ein Verfügbarkeitsstatus der mobilen Vorrichtung (122) in dem drahtlosen Kommunikationsnetzwerk (116) bekannt ist, die Daten zu übertragen, wenn der bekannte Verfügbarkeitsstatus "verfügbar" entspricht, und die Daten ohne Übertragung in eine Warteschlange einzureihen, wenn der bekannte Verfügbarkeitsstatus "nicht verfügbar" entspricht; und
der Host-Dienst (102) weiter konfiguriert ist, wenn der Verfügbarkeitsstatus der mobilen Vorrichtung (122) in dem drahtlosen Kommunikationsnetzwerk (116) nicht bekannt ist, einen gespeicherten Verfügbarkeitsstatus der mobilen Vorrichtung von dem drahtlosen Router-System (110) anzufordern und zu empfangen, den bekannten Verfügbarkeitsstatus einzustellen basierend auf dem gespeicherten Verfügbarkeitsstatus der mobilen Vorrichtung (122), empfangen von dem drahtlosen Router-System (110), die Daten zu übertragen, wenn der eingestellte bekannte Verfügbarkeitsstatus "verfügbar" entspricht, und die Daten ohne Übertragung an das drahtlose Router-System (110) in eine Warteschlange einzureihen, wenn der eingestellte bekannte Verfügbarkeitsstatus "nicht verfügbar" entspricht.

22. Host gemäß Anspruch 21, wobei das Kommunikationsnetzwerk (108) das Internet aufweist.

23. Host gemäß Anspruch 21, wobei der Host-Dienst (102) weiter konfiguriert ist, die Warteschlangen-Daten zu löschen, wenn die Übertragung der Warteschlangen-Daten an die mobile Vorrichtung (122) erfolgreich ist.

24. Host gemäß Anspruch 21, wobei der Host-Dienst (102) weiter konfiguriert ist, zu bestimmen, ob der Verfügbarkeitsstatus der mobilen Vorrichtung (122) in dem drahtlosen Kommunikationsnetzwerk (116) bekannt ist, basierend auf einem gespeicherten Verfügbarkeitsstatus an dem Host-Dienst (102), und den Verfügbarkeitsstatus an dem Host-Dienst (102) auf "unbekannt" einzustellen, wenn:
es keinen gespeicherten Verfügbarkeitsstatus gibt,
eine vorgegebene Zeitdauer vergangen ist, seit der Verfügbarkeitsstatus gespeichert wurde, und
ein Verbindung zwischen dem Host-Dienst (102) und dem drahtlosen Router-System (110) abgebrochen ist.

25. Host gemäß Anspruch 21, wobei der gespeicherte Verfügbarkeitsstatus der mobilen Vorrichtung (122) an dem drahtlosen Router-System (110) auf einem Anzeigesignal von der mobilen Vorrichtung (122) basiert.

## Revendications

1. Procédé destiné à être utilisé dans la délivrance de données depuis un service hôte (102) à un dispositif de communication mobile sans fil (122) par l'intermédiaire d'un système de routage sans fil (110) qui est couplé à de multiples réseaux de communication sans fil et au service hôte (102) par l'intermédiaire d'un réseau de communication (108), le procédé comprenant :
la génération des données au service hôte (102) ;
le fait de déterminer au service hôte (102) si un état de disponibilité du dispositif mobile (122) dans un réseau de communication sans fil (116) est connu ;
si l'état de disponibilité est connu au service hôte (102),
la transmission des données du service hôte (102) au système de routage sans fil (110) si l'état de disponibilité connu au service hôte (102) correspond à une disponibilité,
la mise en file d'attente des données au service hôte (102) sans transmission au système de routage sans fil (110) si l'état de disponibilité connu correspond à une indisponibilité ;
si l'état de disponibilité n'est pas connu au service hôte (102),
la demande et la réception, depuis le système de routage sans fil (110), d'un état disponible, mis en antémémoire, du dispositif mobile ; et
l'établissement, au service hôte (102), de l'état de disponibilité, mis en antémémoire, du dispositif mobile (122) reçu du système de routage sans fil (110) en tant qu'état de disponibilité connu.

2. Procédé selon la revendication 1, comprenant en outre :
la transmission des données du système de routage sans fil (110) au dispositif mobile (122) si l'état de disponibilité connu au service hôte (102) correspond à une disponibilité.

3. Procédé selon la revendication 2, dans lequel le réseau de communication (108) comprend l'Internet.

4. Procédé selon la revendication 2, dans lequel la génération des données au service hôte (102) comprend :
la génération des données en réponse à la réception de données correspondantes ; et
la mise en file d'attente des données au service hôte (102).

5. Procédé selon la revendication 4, qui comprend en outre, après la mise en file d'attente des données au service hôte (102) :
la mise à jour de l'état de disponibilité, mis en antémémoire, du dispositif mobile (122) au système de routage sans fil (110) pour qu'il soit disponible si le système de routage sans fil (110) reçoit un signal d'indication ;
la transmission de l'état de disponibilité, mis en antémémoire et mis à jour, comme disponible au service hôte (102) depuis le système de routage sans fil (110) ;
la transmission des données mises en fil d'attente du service hôte (102) au système de routage sans fil (110) ; et
la purge des données mises en fil d'attente depuis le service hôte (102) si la transmission au dispositif mobile (122) est réussie.

6. Procédé selon la revendication 5, dans lequel le fait de déterminer au service hôte (102) si l'état de disponibilité du dispositif mobile (122) dans le système de communication sans fil (100) est connu, est basé sur un état de disponibilité mémorisé au service hôte (102) et comprend au moins l'un :
du fait de déterminer que l'état de disponibilité au service hôte (102) est inconnu s'il n'y a pas d'état de disponibilité mémorisé au service hôte (102) ;
du fait de déterminer que l'état de disponibilité au service hôte (102) est inconnu si une période de temps prédéterminée s'est écoulée depuis la mise en mémoire de l'état de disponibilité ; et
du fait de déterminer que l'état de disponibilité au service hôte (102) est inconnu si une connexion entre le service hôte (102) et le système de routage sans fil (110) est perdue.

7. Procédé selon la revendication 6, dans lequel l'état de disponibilité, mis en antémémoire, du dispositif mobile (122) au système de routage sans fil (110) est basé sur un signal d'indication provenant du dispositif mobile (122).

8. Procédé selon la revendication 7, dans lequel le signal d'indication comprend de multiples états de fonctionnalité du dispositif mobile (122).

9. Procédé selon la revendication 8, comprenant en outre :
le fait de rendre l'état de disponibilité, mis en antémémoire, du dispositif mobile (122) au système de routage sans fil (110) égal à une disponibilité si le système de routage sans fil (110) reçoit le signal d'indication provenant du dispositif sans fil (122), et
le fait de rendre l'état de disponibilité, mis en antémémoire, du dispositif mobile (122) au système de routage sans fil (110) égal à une indisponibilité si le système de routage sans fil (110) ne reçoit pas le signal d'indication provenant du dispositif mobile (122).

10. Procédé selon la revendication 9, comprenant en outre :
après que l'état de disponibilité, mis en antémémoire, du dispositif mobile (122) au système de routage sans fil (110) a été rendu égal à une disponibilité,
le fait de maintenir l'état de disponibilité, mis en antémémoire, au système de routage sans fil (110) égal à une disponibilité si le système de routage sans fil (110) reçoit du dispositif mobile (122) le signal d'indication à un intervalle prédéterminé ; et
le fait de changer l'état de disponibilité, mis en antémémoire, au système de routage sans fil (110), en indisponible si le système de routage sans fil (110) ne reçoit pas le signal d'indication provenant du dispositif mobile (122) dans l'intervalle prédéterminé, et
la transmission de l'état de disponibilité, mis en antémémoire, changé du système de routage sans fil (110) au service hôte (102) ;
après avoir rendu l'état de disponibilité, mis en antémémoire, du dispositif mobile (122) au système de routage sans fil (110), égal à indisponible,
le changement de l'état de disponibilité, mis en antémémoire, au système de routage sans fil (110), en disponible si le système de routage sans fil (110) reçoit le signal d'indication provenant du dispositif mobile (122), et
la transmission de l'état de disponibilité, mis en antémémoire, changé, du système de routage sans fil (110) au service hôte (102).

11. Système de communication sans fil (100) configuré pour délivrer des données à un dispositif de communication mobile sans fil, le système de communication sans fil (100) comportant :
un service hôte (102) configuré pour générer des données devant être délivrées au dispositif mobile (122), pour déterminer si un état de disponibilité du dispositif mobile (122) dans un réseau de communication sans fil (116) est connu, pour transmettre les données si l'état de disponibilité connu correspond à une disponibilité, et pour mettre en file d'attente les données sans transmission si l'état de disponibilité connu correspond à une indisponibilité ;
un système de routage sans fil (110) destiné à être connecté au service hôte (102) par l'intermédiaire d'un réseau de communication (108) et à de multiples réseaux de communication sans fil qui comprennent le réseau de communication sans fil (116), le système de routage sans fil (110) étant configuré pour déterminer et mettre en antémémoire l'état de disponibilité du dispositif mobile (122) dans le réseau de communication sans fil (116), pour recevoir les données provenant du service hôte (102) lorsque l'état de disponibilité du dispositif mobile (122) est disponible, et pour transmettre les données ; et
le réseau (116) de communication sans fil couplé au système de routage sans fil (110) et au dispositif mobile (122), le réseau de communication sans fil (116) étant configuré pour recevoir les données provenant du système de routage sans fil (110) et pour transmettre les données au dispositif mobile (122),
dans lequel :
si le service hôte (102) détermine que l'état de disponibilité du dispositif mobile (122) dans le réseau de communication sans fil (116) n'est pas connu, le service hôte (102) est configuré en outre pour demander et recevoir l'état de disponibilité, mis en antémémoire, du dispositif mobile depuis le système de routage sans fil (110), pour établir l'état de disponibilité connu sur la base de l'état de disponibilité, mis en antémémoire, du dispositif mobile (122), reçu du système de routage sans fil (110), pour transmettre les données si l'état de disponibilité connu et établi correspond à une disponibilité, et pour mettre en file d'attente les données si l'état de disponibilité connu et établi correspond à une indisponibilité.

12. Système de communication sans fil (100) selon la revendication 11, dans lequel le réseau de communication (108) comprend l'Internet.

13. Système de communication sans fil (100) selon la revendication 11, dans lequel, si le système de routage sans fil (110) reçoit un signal d'indication après que les données ont été mises en file d'attente au service hôte (102), le système de routage sans fil est configuré en outre pour :
mettre à jour l'état de disponibilité, mis en antémémoire, du dispositif mobile (122) afin de le rendre disponible,
transmettre au service hôte (102) l'état de disponibilité, mis à jour, du dispositif mobile (122),
recevoir du service hôte (102) les données mises en file d'attente, et
transmettre au dispositif mobile (122) les données mises en file d'attente.

14. Système de communication sans fil (100) selon la revendication 13, dans lequel le service hôte (102) est en outre configuré pour purger les données mises en file d'attente si la transmission au dispositif mobile (122) des données en file d'attente est réussie.

15. Système de communication sans fil (100) selon la revendication 14, dans lequel le service hôte (102) est configuré en outre pour déterminer si l'état de disponibilité du dispositif mobile (122) dans le réseau de communication sans fil (116) est connu sur la base d'un état de disponibilité mémorisé au service hôte (102), et pour établir l'état de disponibilité au service hôte (102) comme inconnu si :
il n'y a pas d'état de disponibilité mémorisé,
une période de temps prédéterminée s'est écoulée depuis que l'état de disponibilité a été mémorisé, et
une connexion entre le service hôte (110) et le système de routage sans fil (110) est perdue.

16. Système de communication sans fil (100) selon la revendication 15, dans lequel l'état de disponibilité, mis en antémémoire, du dispositif mobile (122) au système de routage sans fil (110) est basé sur un signal d'indication provenant du dispositif mobile (122).

17. Système de communication sans fil (100) selon la revendication 16, dans lequel le signal d'indication comprend de multiples états de fonctionnalité du dispositif mobile (122).

18. Système de communication sans fil (100) selon la revendication 17, dans lequel le système de routage sans fil (110) est configuré en outre pour rendre l'état de disponibilité, mis en antémémoire, du dispositif mobile (122) égal à une disponibilité si le système de routage sans fil (110) reçoit le signal d'indication provenant du dispositif mobile (122), et pour rendre l'état de disponibilité, mis en antémémoire, du dispositif mobile (122) au système de routage sans fil (110) égal à une indisponibilité si le système de routage sans fil (110) ne reçoit pas le signal d'indication provenant du dispositif mobile (122).

19. Système de communication sans fil (100) selon la revendication 18, dans lequel, après que le système de routage sans fil (110) a rendu l'état de disponibilité, mis en antémémoire, du dispositif mobile (122) égal à une disponibilité, le système de routage sans fil (110) est configuré en outre pour :
maintenir l'état de disponibilité, mis en antémémoire, au système de routage sans fil (110) égal à une disponibilité si le système de routage sans fil (110) reçoit le signal d'indication provenant du dispositif mobile (122) à un intervalle prédéterminé,
changer en indisponible l'état de disponibilité, mis en antémémoire, si le système de routage sans fil (110) ne reçoit pas le signal d'indication provenant du dispositif mobile (122) dans l'intervalle prédéterminé, et
transmettre au service hôte (102) l'état de disponibilité mis en antémémoire et changé.

20. Système de communication sans fil (100) selon la revendication 18, dans lequel, après que le système de routage sans fil (110) a rendu égal à indisponible l'état de disponibilité, mis en antémémoire, du dispositif mobile (122), le système de routage sans fil (110) est en outre configuré pour :
changer en disponible l'état de disponibilité, mis en antémémoire, au système de routage sans fil (110), si le système de routage (110) reçoit le signal d'indication provenant du dispositif mobile (122), et
transmettre du système de routage sans fil (110) au service hôte (102) l'état de disponibilité mis en antémémoire et changé.

21. Hôte qui procure un service hôte (102) pour délivrer des données à un dispositif de communication mobile sans fil (122) en passant par un réseau de communication sans fil (116), le service hôte (102) étant conçu pour être connecté à un système de routage sans fil (110) en passant par un réseau de communication (108) pour des communications par l'intermédiaire du réseau de communication sans fil (116), le système de routage sans fil (110) étant couplé à de multiples réseaux de communication sans fil qui comprennent le réseau de communication sans fil (116), le service hôte (102) étant **caractérisé en ce que:**
le service hôte (102) est configuré pour générer des données devant être délivrées au dispositif mobile (122), pour déterminer si un état de disponibilité du dispositif mobile (122) dans le réseau de communication sans fil (116) est connu, pour transmettre les données si l'état de disponibilité connu correspond à une disponibilité, et pour mettre en file d'attente les données sans transmission si l'état de disponibilité connu correspond à une indisponibilité ; et
le service hôte (110) est configuré en outre pour, si l'état de disponibilité du dispositif mobile (122) dans le réseau de communication sans fil (116) n'est pas connu, demander et recevoir du système de routage sans fil (110) un état disponible, mis en antémémoire, du dispositif mobile, pour établir l'état de disponibilité connu sur la base de l'état de disponibilité, mis en antémémoire, du dispositif mobile (122) reçu du système de routage sans fil (110), pour transmettre les données si l'état de disponibilité connu et établi correspond à une disponibilité, et pour mettre en fil d'attente les données sans transmission au système de routage sans fil (110) si l'état de disponibilité connu et établi correspond à une indisponibilité.

22. Hôte selon la revendication 21, dans lequel le réseau de communication (108) comprend l'Internet.

23. Hôte selon la revendication 21, dans lequel le service hôte (102) est configuré en outre pour purger les données mises en file d'attente si la transmission des données mises en file d'attente au dispositif mobile (122) est réussie.

24. Hôte selon la revendication 21, dans lequel le service hôte (102) est configuré en outre pour déterminer si l'état de disponibilité du dispositif mobile (122) dans le réseau de communication sans fil (116) est connu sur la base d'un état de disponibilité mémorisé au service hôte (102), et pour établir l'état de disponibilité au service hôte (102) comme inconnu si :
il n'y a pas d'état de disponibilité mémorisé,
une période de temps prédéterminée s'est écoulée depuis que l'état de disponibilité a été mémorisé, et
une connexion entre le service hôte (102) et le système de routage sans fil (110) est perdue.

25. Hôte selon la revendication 21, dans lequel l'état de disponibilité, mis en antémémoire, du dispositif mobile (122) au système de routage sans fil (110) est basé sur un signal d'indication provenant du dispositif mobile (122).
